# EUROPEAN PATENT SPECIFICATION

(11) **EP 1 740 004 B1**
(45) Date of publication and mention of the grant of the patent: **09.10.2013**
(21) Application number: 05727692.5
(22) Date of filing: 25.03.2005
(51) Int. Cl.: H04W 48/20

(54) **MOBILE COMMUNICATION SYSTEM**
MOBILKOMMUNIKATIONSSYSTEM
SYSTEME DE COMMUNICATION MOBILE

(30) Priority: 25.03.2004 JP 2004089003
(43) Date of publication of application: 03.01.2007
(73) Proprietor: NEC Corporation, Minato-ku Tokyo 108-8001 (JP)
(72) Inventor: NAITO, Kosuke, Tokyo 108-8001 (JP); OGAMI, Tadashi, Tokyo 108-8001 (JP)
(74) Representative: Samson & Partner
(86) International application number: PCT/JP2005/006415
(87) International publication number: WO 2005/094111

(56) References cited:
- EP-A1- 0 957 653
- WO-A1-99/14974
- DE-A1- 19 643 186
- JP-A- 11 032 371
- JP-A- 2001 507 539
- JP-A- 2003 309 865

## Description

### Technical Field

The present invention relates to a mobile communication system.

### Background Art

A base station in a mobile communication system has become compact and light. Further, the base station is examined as an in-structure base station to be installed in a structure, in particular, at each home.

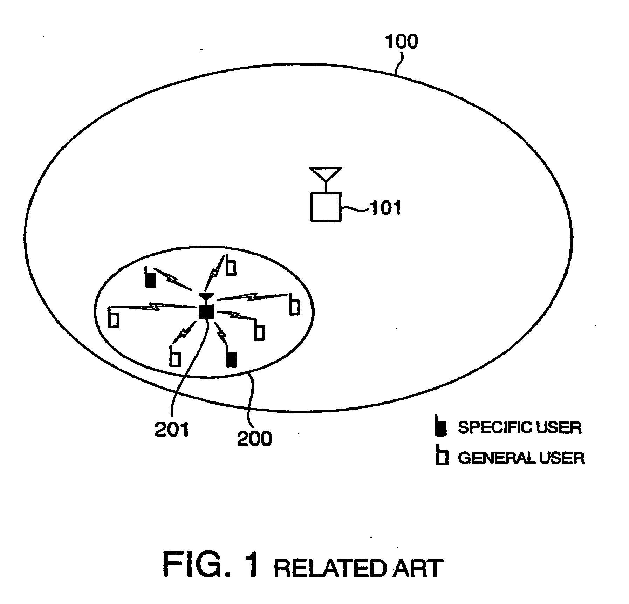

Fig. 1 shows a mobile communication system according to a related art, in which a large covered area (or, service area) 100 having an existing base station 101 includes an in-structure base station 201 having a small cover area (or, service area) 200, and the covered area 100 of the existing base station 101 includes the covered area 200 of the in-structure base station 201.

Upon using the base station as the in-structure base station 201 as mentioned above, the in-structure base station 201 is used only by a specific user (user of the in-structure base station 201 is assumed), it is required that a general user that unexpectedly enters the covered area 200 of the in-structure base station 201 cannot use resources. However, the current mobile communication system does not correspond to access limit varied depending on users or base stations as the unit basis.

Therefore, if many general users except for the specific user who originally wants to use the in-structure base station 201 are within the covered area 200 of the in-structure base station 201, the general users use the resources of the base station and the service quality to the specific user deteriorates.

That is, even at an in-structure base station or a home base station, (in order to use the existing terminal), a downlink common channel should send data compatible with that of the existing base station. Originally, even a terminal that is not allowed to use the resource of the in-structure base station and the home base station can access and use the resource. If the identification is devised on a network, the request of positional registration or of calling from the terminal cannot be prevented.

Japanese Patent No. 2953113 discloses a method by which each mobile station stores an identification number of an accessible base station, the stored identification number is compared with a base station ID number in a downlink common channel, and the access is permitted only when both the identification numbers match each other. It is not practical that all base station ID numbers that are permitted (or are not permitted) with respect to the access are stored and one base station ID number is compared with all ones every time.

DE 196 43 186 A1 and WO 99/14974 A1 disclose technical background for the present invention.

DE 196 43 186 A1 discloses a wireless connection of mobile communication terminals to public, private or home communication area base stations. Identifications of communication areas to which mobile communication terminals subscribe are stored in the communication terminals. Priorities can be allocated to stored identifications. When access to various areas is possible the mobile communication terminal accesses the area with the highest priority as far as stored identification is concerned.

WO 99/14974 A1 discloses a mobile cellular communications system and method, which limit access to private network cells only to mobile terminals that are used by subscribers to those private networks. In cells belonging to the public network, only information about the public cells is broadcast on the public system information control channels. This public cell information is thus the only cell information that the non-subscribers' mobile terminals are able to receive. When a mobile terminal belonging to a subscriber of one or more private networks surfaces in a public cell, the public network transmits a radio link control message to that mobile terminal, which contains information about the candidate cells for selection associated with the private network(s) involved. The private network transmits system information via the private cell to a subscribing mobile terminal about the private and public cells' neighboring cells. Consequently, the subscribing mobile terminal will regard the public network cells and private network cells as integral parts of the overall cellular system. Cells associated with private networks to which that mobile terminal's end user is a "non-subscriber" are thus "invisible" to that mobile terminal.

### Disclosure of Invention

### Problems to be Solved by the Invention

According to the present invention, in order to solve the problems, there is provided a mobile communication system in which a general user cannot access a base station for specific use and a specific user thus can occupy and use the base station for specific use.

That is, it is an object of the present invention to prevent the use of resources of a base station from a general user other than a specific user and the deterioration in service quality to the specific user as the using result in an in-structure base station or home base station that is assumed to provide services to the specific user.

### Means for Solving the Problems

According to the present invention, a mobile communication system comprises a base station and a terminal, wherein
the base station is adapted to allow a downlink signal to include not only a base station ID number indicating the base station but also an identification signal for specific use indicating that the base station is for specific use and to send the downlink signal, and
the terminal comprises a memory that is adapted to store a list of base station ID numbers of an accessible base station or an inaccessible base station for every identification signal for specific use, and to search whether or not the base station ID numbers in the received downlink signal is in the list of base station ID numbers for every detected identification signal for specific use when the identification signal for specific use detected from the downlink signal is ON, to determine whether or not access to the base station is permitted on the basis of the search in the list of base station ID numbers, and to perform communication with the base station only when the access is permitted.

Further, the present invention provides a base station in a mobile communication system comprises a base station and a terminal, wherein
the base station is adapted to allow a downlink signal to include not only a base station identification number indicating the base station but also an identification signal for specific use indicating that the base station is for specific use, and to send the downlink signal, and
the base station comprises an identification signal generation unit that is adapted to generate the identification signal for specific use being ON if the access to the base station is limited and a modulation unit that is adapted to allow the generated identification signal for specific use and the base station identification signal to be included in the downlink signal, and to send the downlink signal.

Furthermore, the present invention provides a terminal in a mobile communication system comprises a base station and a terminal, wherein
the terminal is adapted to receive a downlink signal including not only a base station identification number indicating the base station but also an identification signal for specific use indicating that the base station is for specific use, and
the terminal comprises a memory that is adapted to store a list of base station ID numbers of an accessible base station or an inaccessible base station for every identification signal for specific use, and
a determination unit that is adapted to search whether or not the base station ID number in the received downlink signal is in the list of base station ID numbers for every detected identification signal for specific use when the identification signal for specific use detected from the downlink signal is ON, to determine whether or not access to the base station is permitted on the basis of the search in the list of base station ID numbers, and to perform communication with the base station only when the access is permitted.

### Advantages

According to the present invention, a general user cannot access the base station for specific use. As a consequence, it is possible to obtain a mobile communication system in which the specific user can occupy and use the base station.

That is, according to the present invention, it is possible to prevent the use of resources of a base station from a general user other than a specific user and the deterioration in service quality to the specific user as the using result in an in-structure base station or home base station that is assumed to provide services to the specific user.

Further, according to the present invention, a relatively easy method can accomplish the access limit varied depending on the terminal and the base station only between the terminal and the base station, which can be conventionally realized only at the core of a mobile communication network, e.g., a management center of user information.

### Brief Description of the Drawings

Fig. 1 is a diagram for illustrating a mobile communication system according to a related art.
Fig. 2 is a diagram for illustrating a mobile communication system according to the present invention.
Fig. 3 is a block diagram showing one mobile communication system base station (base station) in a mobile communication system according to the first embodiment of the present invention.
Fig. 4 is a block diagram showing the one mobile communication terminal (terminal) in the mobile communication system according to the first embodiment.
Fig. 5 is a time chart for illustrating operation of the terminal shown in Fig. 4.
Fig. 6 is a block diagram showing another mobile communication system base station (base station) according to the present invention.
Fig. 7 is a block diagram showing a mobile communication system according to the second embodiment of the present invention.

### Best Mode for Carrying Out the Invention

Next, a description is given of embodiments of the present invention with reference to the drawings.

According to the present invention, not only a base station ID number indicating a base station but also an identification signal for specific use indicating a base station for specific use (for in-structure, home, or hot spot) is added to a downlink common channel for sending data from the base station.

A terminal stores a list of base station ID number of an accessible (or inaccessible) base station every identification signal for specific use. Upon detecting the received identification signal for specific use from the downlink common channel, the received base station ID number in the downlink common channel is searched from the list of base station ID numbers of the detected identification signal for specific use and communication is performed only when the access of the base station ID number is permitted.

The list of base station ID number for each identification signals for specific use is stored in a memory such as an SIM (Subscriber Identify Module). Alternatively, it may be written by a shop or may be rewritten during the communication.

Thus, only the specific user that registers in advance the list of base station ID number for each identification signal for specific use can access the base station. It is thus possible to prevent that another general user uses resources of the base station.

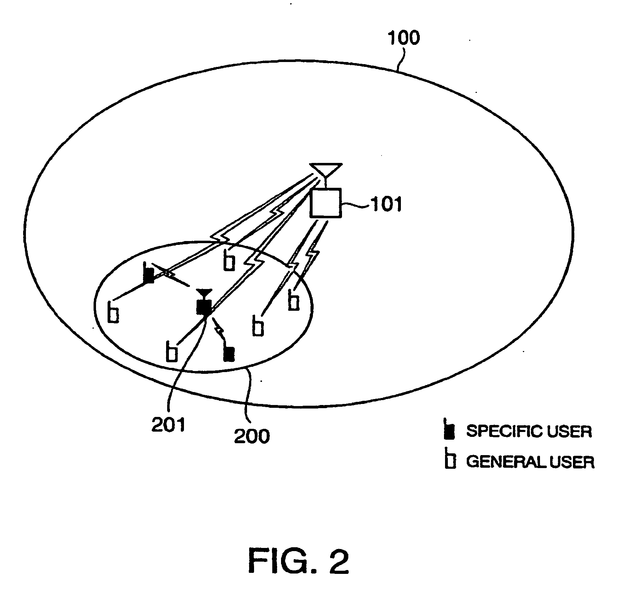

First, a mobile communication system according to the present invention will be described with reference to Fig. 2. Similarly, the mobile communication system shown in Fig. 2 has such an arrangement that a large covered area (or, service area) 100 of an existing base station 101 includes an in-structure base station 201 of a small covered area (or, service area) 200 and the covered area 100 of the existing base station 101 includes the covered area 200 of the in-structure base station 201.

The present invention provides the mobile communication system in which a specific user (user of the in-structure base station 201) can occupy and use the base station 201 by preventing the access of general users to the base station 201 for specific use, as shown in Fig. 2. That is, according to the present invention, the resource assigned to the specific user is assured by preventing the access of general users to the in-structure base station 201.

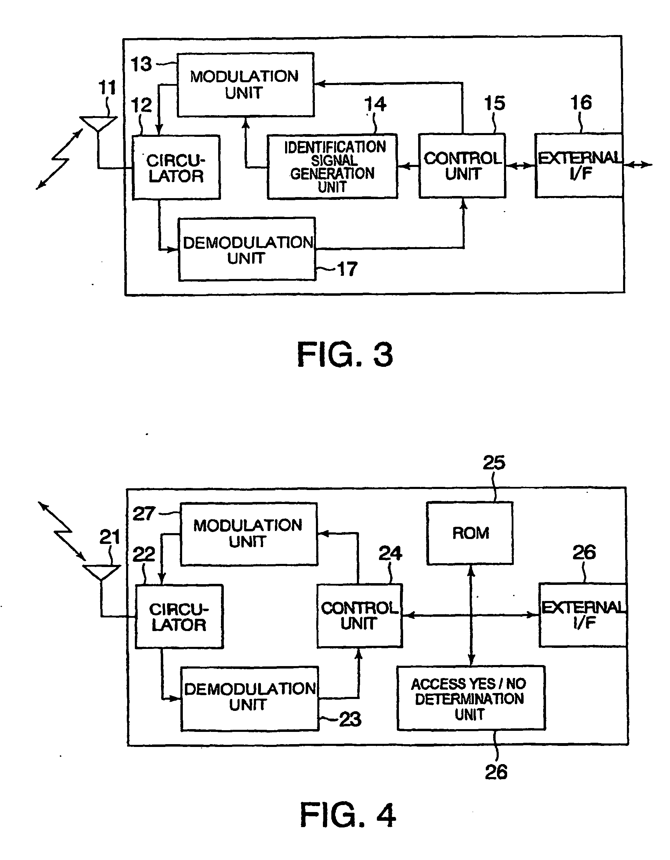

Fig. 3 shows the structure of a mobile communication system base station (hereinafter, simply referred to as a base station) in a mobile communication system according to the first embodiment of the present invention.

Referring to Fig. 3, an identification signal generation unit 14 generates an identification signal for specific use indicating the base station for specific user (in-structure, home, or hot spot), and sends the identification signal to a modulation unit 13. The identification signal for specific use is generated in accordance with an instruction from a control unit 15 or an external instruction via an external 1/F (interface) 16.

It is noted that the identification signal generation unit 14 can partly form the control unit 15.

The modulation unit 13 multiplexes and modulates the identification signal for specific use as well as another control signal or user data sent from the control unit 15 and the base-station identification signal of the base station, and sends the multiplexed and modulated signals via a circulator 12 and an antenna 11. A demodulation unit 17 has a function for demodulating a signal sent from the terminal.

The antenna 11, the circulator 12, the modulation unit 13, the demodulation unit 17, and the external 1/F 16 are well known by those in the art and do not directly relate to the present invention. Accordingly, a specific description thereof is omitted.

Fig. 4 shows the structure of a mobile communication terminal (hereinafter, referred to as a terminal) in the mobile communication system according to the first embodiment.

Referring to Fig. 4, a signal sent from the base station is captured to a demodulation unit 23 via an antenna 21 and a circulator 22, and the identification signal for specific use is received. The identification signal for specific use is sent from a control unit 24 to an access YES/NO determination unit 26, and is determined on the basis of the list of base station ID number for each identification signal for specific use, stored in a ROM (Read-Only Memory) 25, whether or not the access to the base station is permitted. If it is determined that the access is permitted, an up sending signal is generated by a modulation unit 27 and is sent via the circulator 22 and the antenna 21.

It is noted that the access YES/NO determination unit 26 can partly form the control unit 24.

The antenna 21, the circulator 22, the modulation unit 27, the demodulation unit 23, and the terminal 1/F 28 are well known by those in the art and do not directly relate to the present invention. Thus, a specific description thereof is omitted.

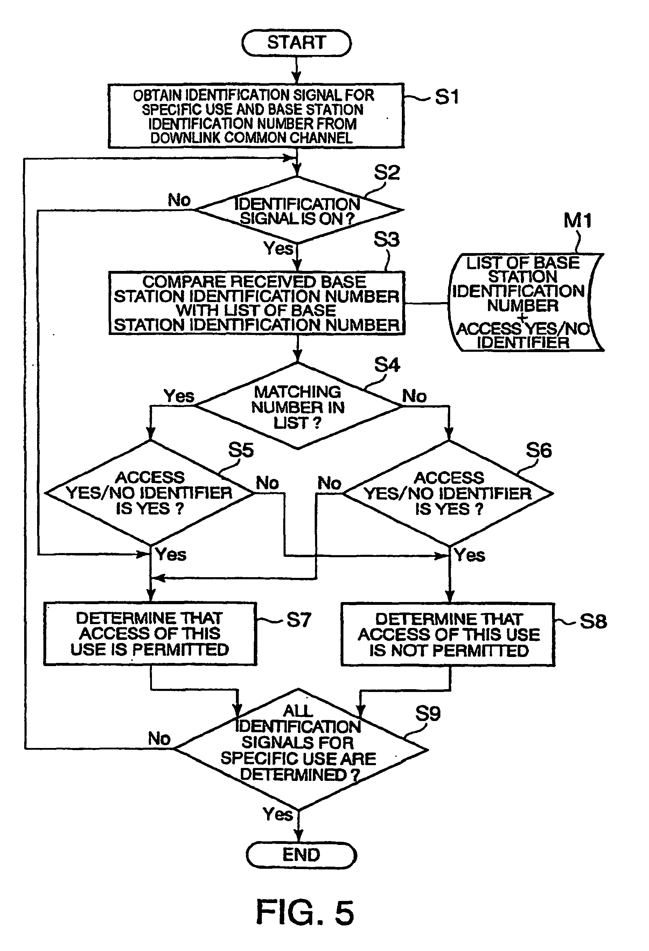

Next, a detailed description will be given of the operation of the access YES/NO determination unit 26 in the terminal shown in Fig. 4 with reference to a flowchart shown in Fig. 5.

First, the demodulation unit obtains the identification signal for specific use and the base station ID number from a downlink reception signal (S1). Subsequently, it is determined whether or not the identification signal for specific use corresponding to the specific use, indicated by the received identification signal for specific use, is ON (S2). If it is determined that the identification signal for specific use is OFF, the access is not limited and it is therefore determined that the access is permitted (S7).

If the identification signal for specific use is ON, the received base station ID number is searched in the list of base station ID number, stored in a memory 25 (M1 in Fig. 5) of the terminal (S3). It is noted that the list can be "null". If the list is "null", the matching number does not always exist.

If the matching number exists (S4), an access YES/NO identifier stored in the memory 25 (M1 in Fig. 5) is checked (S5). If the access YES/NO identifier indicates YES, it is determined that the access is permitted (S7). If not so, it is determined that the access is not permitted (S8).

Further, if the matching number does not exist in S4, similarly, the access YES/NO identifier (M1) is checked (S6). If the access is permitted in S6, on the contrary to S5, it is determined that the access is not permitted (S8). If not so, it is determined that the access is permitted (S7).

If the identification signal for specific use that is not subjected to the processing exists, the processing returns to S2 and the processing is performed (S9). After all processing is performed, the sequence ends.

It is noted that the operation in the flowchart is performed every terminal connection to the base station.

Next, a description is given of determination as whether or not the identification signal for specific use is generated. As described in the structure example, the control unit 15 in the base station directly determines whether or not the identification signal for specific use is generated. Alternatively, an upper layer of the control unit on a mobile communication network determines it and notifies the result to the base station. Further, an instruction from the upper layer and processing of the base station control unit can be combined.

In the determination as whether or not the identification signal for specific use is generated, a service provider can be uniquely determined depending on the setting place or the setting object. Further, information such as the resource using situation or time zone of the base station is added and can be sequentially switched.
- Even in the case of the base station for specific use, the identification signal for specific use is OFF and the access of general users is permitted until a resource using rate is over one predetermined value.
- At an in-structure base station for office, in the evening, night, and holiday, the identification signal for specific use is set to OFF. At the home base station, at a time zone of daytime when a person is not absent at home, the identification signal for specific use is set to OFF.
- By combining the two manners, a threshold of the resource using rate is varied depending on application or time zone.
- When the resource is tight at the general base station having an overlapped area of the base station for specific use, the identification signal for specific use is set to OFF.

According to a first advantage of according to the first embodiment, at the in-structure base station or home base station installed for specific user, only the specific user can access the resource. Therefore, it is prevented that another user uses the resource.

According to a second advantage of the first embodiment, the terminal can determine whether or not the access is permitted only from the downlink common channel. Therefore, the identification is not necessary on the upper layer on the network and the access can be limited variably depending on the terminal and the base station. Further, this enables the reduction of unnecessary positional registration and of handover frequency. As a consequence, the power consumption of the terminal and the base station can be reduced.

According to a third advantage of the first embodiment, ON/OFF operation of the identification signal for specific use can be controlled. Even at the in-structure base station or home base station for specific user, flexible switching depending on the resource using situation and day of the week and time zone enables efficient use of equipment of the base station and the resource.

Herein, the method according to the first embodiment is compared with the conventional method disclosed in Japanese Patent No. 2953113.

According to the conventional method, the terminal has to store all identification numbers of accessible base stations. In order to cover all base stations of one carrier, few or tens several thousands identification numbers need to be registered. Every area movement, in the worst case, the identification numbers of all the areas need to be compared with the identification numbers of the moved base stations. Further, when the base station is added, the lists of all the terminals need to be written.

On the other hand, with the method according to the first embodiment, only when the identification signal for specific use is ON, the identification number is compared with the list of base station identification numbers. Therefore, any user is not affected by the addition and deletion of an accessible general base station.

For the user that does not the base station for specific use, the list is "null" and the access YES/NO identifier is set to "access YES". If so, the load of the processing is not caused and the user is not affected when the base station for specific use is added.

It is considered that the number of base station for specific use of one user is sufficiently 10 to 20. Therefore, if the identification number is compared with the list thereof every area movement, the amount of processing is not so large.

Further, when a fast-communicable base station is arranged like a hot spot, the user of the fast communication needs to be able to use any host spots. Even in this case, the user that does not use the fast communication sets the list for use thereof as "null" and also sets the access YES/NO identifier as "access YES". Further, the user that does not use the fast communication sets the list as "null" and also sets the access YES/NO identifier as "access NO". As a consequence, the access of many specific users/base stations can be easily limited.

According to the first embodiment, the description has been given of the method for controlling the determination as the generation of the identifications signal for specific use depending on the setting place, setting object, day of the week, and the time zone. For example, the user is not periodically at home and even when he is at home, the resource of the base station does not need to be occupied. Thus, the best control is not necessarily performed. Hereinbelow, a description is given of another mobile communication system base-station corresponding to the above case according to the present invention.

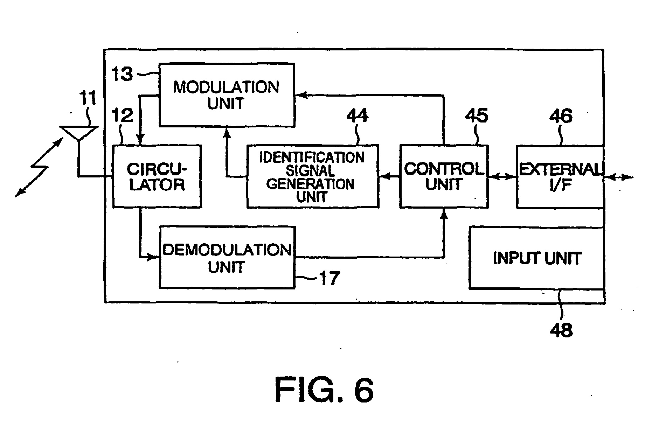

Referring to Fig. 6, the structure of the other mobile communication system base station (hereinafter, referred to as a base station) is shown according to the present invention.

As compared with the base station shown in Fig. 3, the base station shown in Fig. 6 has additionally has an input unit 48. A specific user of the base station inputs whether or not the resource of the base station for specific use is occupied with the input unit and the input result is sent to a control unit 45.

When the control unit 45 determines whether or not an identification signal for specific use is generated, the control unit 45 uses the input result as a determination resource upon generating the identification signal for specific use and sends the result to an identification signal generation unit 44. When a portion other than the control unit 45 in the base station, such as a control unit in the mobile communication network, determines whether or not an identification signal for specific use is generated, the control unit 45 sends an input result via an external 1/F 46 and receives the determination result of generating the externally-determined identification signal for specific use.

Further, as mentioned according to the first embodiment, upon using such a control method for permitting the access of general users when the resource using rate is a predetermined value or less, the input unit 48 can input a resource using rate desired by the specific user, thereby enabling the fine control.

It is noted that the operation of other components is the same as that shown in Fig. 3. Thus, a detailed description thereof is omitted.

Further, on the mobile communication system using the base station shown in Fig. 6, in order to optimally the resource, the specific user at the setting place of the base station needs to frequently set the base station in accordance with the using situation. Only if there are any merits obtained by frequent setting operation, the user can be guided as mentioned above. Hereinbelow, a description is given of the structure of a system for presenting the merit not only to the user but also to a service carrier in this case.

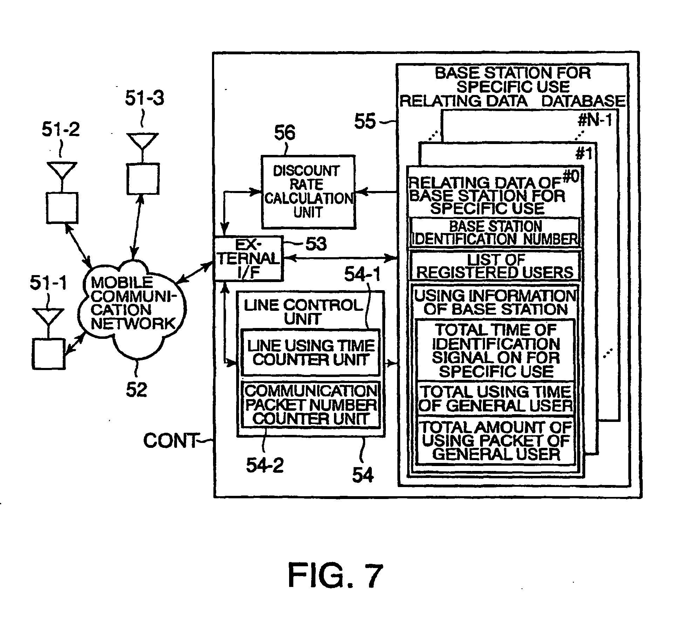

Fig. 7 shows the structure of a mobile communication system according to the second embodiment of the present invention.

Referring to Fig. 7, reference numerals 51-1 to 51-3 denote base stations for specific use having the structure shown in Fig. 6. The base stations periodically sends information indicating whether the identification signal for specific use is ON or OFF to a mobile communication network 52 from the identification signal generation unit 44. The information is sent to a control unit CONT in the mobile communication network 52 and is further sent to a base station relating database 55 (hereinafter, referred to as a database 55) for specific use via an external 1/F 53 thereof.

The database 55 has the following information as databases every base station for specific use.
- Base station identification number
- List of registered users
- Using information of the base station
   - Total time of identification signal ON for specific use
   - Total time of using time of general user
   - Total amount of using packet of general user
When the information indicating the state of the identification signal for specific use sent from the base station is an identification signal ON, the ON time is accumulated in the database 55 and the "total time of identification signal ON for specific use" of the corresponding base station is updated.

When the user performs line communication or packet communication with the resource at the base station, in a line control unit 54, a counter unit 54-1 of a line using time counts the using time of the line and a counter unit 54-2 of the number of communication packets counts the amount of communication packets. After ending the communication, the line control unit 54 sends the counting number to the database 55. Further, the line control unit 54 simultaneously sends the identification number of the user who calls and the identification number of the base station. When the user moves from one base station to another base station during the communication, a plurality of identification numbers of the base stations that perform the communication are sent.

In the database 55, the sent base station identification number is compared with the base station identification number stored in the database, and it is determined whether or not the communication is performed at the base station for specific use. If it is determined that the communication is not performed at the base station for specific use, the processing for the communication ends.

If it is determined that the communication is performed at the base station for specific use, the identification number of the user that performs the communication is compared with the list of registered users of the base station and it is checked whether or not the user is a specific user of the base station. If matching, that is, it is determined that the user is a specific user of the base station, the processing for the communication ends.

If not matching, that is, it is determined that a general user uses the base station, the sent counted using time and counted number of packets are added to the "total using time of general user" and the "total number of using packets of general user", respectively.

A base station ID number discount rate calculation unit 56 calculates a charge discount rate for user of the base station on the basis of using information of the base station stored in the database 55. Generally, as the total time of the identification signal ON for specific use is shorter and as the using time and the amount of using packets of general user are larger, the discount rate is larger to discount the charge.

With this structure, the user of the base station for specific uses actively opens the resource of the base station to general users during the time when the user does not use the base station and such a merit that the charge to be paid to the carrier by the user can be suppressed. Further, the carrier can improve the using efficient of the set base station equipment, and can improve the service quality of all users as a result.

## Claims

1. A mobile communication system comprising a base station (201) and a terminal,
the base station (201) being adapted to allow a downlink signal to include not only a base station identification number indicating the base station (201) but also an identification signal for specific use indicating that the base station (201) is for specific use and to send the downlink signal, and
the terminal comprising a memory (25) that is adapted to store a list of base station identification numbers of an accessible base station or an inaccessible base station for every identification signal for specific use, to search whether or not the base station identification number in the received downlink signal is in the list of base station identification numbers for every detected identification signal for specific use when the identification signal for specific use detected from the downlink signal is ON, to determine whether or not access to the base station is permitted on the basis of the result of the search in the list of base station identification numbers, and to perform communication with the base station only when the access is permitted.

2. A mobile communication system according to Claim 1, wherein the base station is adapted to include the identification signal for specific use in a downlink common channel and to send the signal.

3. A mobile communication system according to Claim 1, further comprising a mobile communication network (52) connected to the base station,
wherein the base station is adapted to periodically send information indicating whether or not the identification signal for specific use is sent, and
the mobile communication network (52) is adapted to send the information to a database (55) for storing the information.

4. A mobile communication system according to Claim 3, wherein the mobile communication network (52) comprises a discount rate calculation unit that is adapted to calculate a charge discount rate of a user of the base station on the basis of using information on the base station stored in the database (55).

5. A mobile communication system according to Claim 4, wherein the discount rate calculation unit is adapted to increase the charge discount rate of the user of the base station as the total time for sending the identification signal for specific use is short or as the using time or the amount of using packet of a general user other than the user of the base station is larger.

6. A base station in a mobile communication system, the mobile communication system comprising the base station and a terminal,
the base station being adapted to allow a downlink signal to include not only a base station identification number indicating the base station but also an identification signal for specific use indicating that the base station is for specific use and to send the downlink signal,
the base station comprising an identification signal generation unit (14, 44) that is adapted to generate the identification signal for specific use being ON if the access to the base station is limited and a modulation unit (13) that is adapted to include the generated identification signal for specific use and the base station identification signal in the downlink signal, and to send the downlink signal.

7. A base station according to Claim 6, wherein the base station is adapted to include the identification signal for specific use in a downlink common channel and to send the signal.

8. A base station according to Claim 6, further comprising
an input unit (48) that is adapted to input whether or not a resource of the base station is to be occupied,
wherein the identification signal generation unit is adapted to generate the identification signal for specific use on the basis of an input result of the input unit (48) indicating that the resource of the base station is to be occupied.

9. A terminal in a mobile communication system, the mobile communication system comprising a base station and the terminal,
the terminal being adapted to receive, from the base station, a downlink signal including not only a base station identification number indicating the base station but also an identification signal for specific use indicating that the base station is for specific use, the terminal comprising:
a memory (25) that is adapted to store a list of base station identification number of an accessible base station or an inaccessible base station for every identification signal for specific use; and
a determination unit (26) that is adapted to search whether or not the base station identification number in the received downlink signal is in the list of base station identification numbers for every detected identification signal for specific use when the identification signal for specific use detected from the downlink signal is ON, to determine whether or not access to the base station is permitted on the basis of the search in the list of base station identification numbers, and to perform communication with the base station only when the access is permitted.

## Patentansprüche

1. Mobilkommunikationssystem mit einer Basisstation (201) und einem Endgerät, wobei
die Basisstation (201) ausgelegt ist, ein Downlinksignal zuzulassen, das nicht nur eine Basisstations-Identifikationsnummer, die die Basisstation (201) angibt, sondern auch ein Identifikationssignal zur speziellen Verwendung aufweist, das angibt, dass die Basisstation (201) zur speziellen Verwendung vorgesehen ist, und um das Downlinksignal zu senden, und wobei
das Endgerät einen Speicher (25) umfasst, der ausgelegt ist, für jedes Identifikationssignal zur speziellen Verwendung eine Liste von Basisstations-Identifikationsnummern einer Basisstation, auf die zugegriffen werden kann, oder einer Basisstation, auf die nicht zugegriffen werden kann, zu speichern, zu suchen, ob sich die Basisstations-Identifikationsnummer in dem empfangenen Downlinksignal in der Liste von Basisstations-Identifikationsnummern für jedes detektierte Identifikationssignal zur speziellen Verwendung befindet oder nicht, wenn das in dem Downlinksignal detektierte Identifikationssignal zur speziellen Verwendung ON ist, um auf der Grundlage des Ergebnisses der Suche in der Liste von Basisstations-Identifikationsnummern zu ermitteln, ob Zugriff auf die Basisstation zugelassen ist oder nicht, und um Kommunikation mit der Basisstation nur dann durchzuführen, wenn der Zugriff zugelassen ist.

2. Mobilkommunikationssystem nach Anspruch 1, wobei die Basisstation ausgelegt ist, das Identifikationssignal zur speziellen Verwendung in einem gemeinsamen Downlinkkanal aufzunehmen und das Signal zu senden.

3. Mobilkommunikationssystem nach Anspruch 1, ferner ein mit der Basisstation verbundenes Mobilkommunikationsnetzwerk (52) umfassend,
wobei die Basisstation ausgelegt ist, periodisch Information zu senden, die angibt, ob das Identifikationssignal zur speziellen Verwendung gesendet wird oder nicht, und
das Mobilkommunikationsnetzwerk (52) ausgelegt ist, die Information zu einer Datenbasis (55) zum Speichern der Information zu senden.

4. Mobilkommunikationssystem nach Anspruch 3, wobei das Kommunikationsnetzwerk (52) eine Rabattratenberechnungseinheit umfasst, die ausgelegt ist, auf der Grundlage einer Verwendung von in der Datenbasis (55) gespeicherten Information über die Basisstation eine Preisrabattrate für einen Benutzer der Basisstation zu berechnen.

5. Mobilkommunikationssystem nach Anspruch 4, wobei die Rabattratenberechnungseinheit ausgelegt ist, die Preisrabattrate des Benutzers der Basisstation zu erhöhen, wenn die Gesamtzeitdauer zum Senden des Identifikationssignals zur speziellen Verwendung kurz ist oder die Nutzungszeitdauer oder das Ausmaß, in dem ein allgemeiner Benutzer, der nicht der Benutzer der Basisstation ist, Pakete nutzt, größer ist.

6. Basisstation in einem Mobilkommunikationssystem, wobei das Mobilkommunikationssystem die Basisstation und ein Endgerät umfasst, wobei
die Basisstation ausgelegt ist, ein Downlinksignal zuzulassen, das nicht nur eine Basisstations-Identifikationsnummer, die die Basisstation angibt, sondern auch ein Identifikationssignal zur speziellen Verwendung aufweist, das angibt, dass die Basisstation zur speziellen Verwendung vorgesehen ist, und um das Downlinksignal zu senden,
die Basisstation eine Identifikationssignalerzeugungseinheit (14, 44), die ausgelegt ist, das Identifikationssignal zur speziellen Verwendung so zu erzeugen, dass es ON ist, wenn der Zugriff auf die Basisstation begrenzt ist, und eine Modulationseinheit (13) umfasst, die ausgelegt ist, das erzeugte Identifikationssignal zur speziellen Verwendung und das Basisstations-Identifikationssignal in das Downlinksignal aufzunehmen und das Downlinksignal zu senden.

7. Basisstation nach Anspruch 6, wobei die Basisstation ausgelegt ist, das Identifikationssignal zur speziellen Verwendung in einen allgemeinen Downlinkkanal aufzunehmen und das Signal zu senden.

8. Basisstation nach Anspruch 6, ferner umfassend,
eine Eingabeeinheit (48), die ausgelegt ist, einzugeben, ob eine Ressource der Basisstation zu belegen ist oder nicht,
wobei die Identifikationssignalerzeugungseinheit ausgelegt ist, das Identifikationssignal zur speziellen Verwendung auf der Grundlage eines Eingabeergebnisses der Eingabeeinheit (48) zu erzeugen, welches angibt, dass die Ressource der Basisstation zu belegen ist.

9. Endgerät in einem Mobilkommunikationssystem, wobei das Mobilkommunikationssystem eine Basisstation und das Endgerät umfasst, wobei
das Endgerät ausgelegt ist, von der Basisstation ein Downlinksignal zu empfangen, das nicht nur eine Basisstations-Identifikationsnummer, die die Basisstation angibt, sondern auch ein Identifikationssignal zur speziellen Verwendung aufweist, das angibt, dass die Basisstation zur speziellen Verwendung vorgesehen ist, wobei das Endgerät umfasst:
einen Speicher (25), der ausgelegt ist, für jedes Identifikationssignal zur speziellen Verwendung eine Liste von Basisstations-Identifikationsnummern einer Basisstation, auf die zugegriffen werden kann, oder einer Basisstation, auf die nicht zugegriffen werden kann, zu speichern, und
eine Bestimmungseinheit (26), die ausgelegt ist, in der Liste von Basisstations-Identifikationsnummern für jedes detektierte Identifikationssignal zur speziellen Verwendung zu suchen, ob sich die Basisstations-Identifikationsnummer in dem empfangenen Downlinksignal in der Liste von Basisstations-Identifikationsnummern befindet, wenn das im Downlinksignal detektierte Identifikationssignal zur speziellen Verwendung ON ist, um auf der Grundlage der Suche in der Liste von Basisstations-Identifikationsnummern zu ermitteln, ob Zugriff auf die Basisstation zugelassen ist oder nicht, und um Kommunikation mit der Basisstation nur dann durchzuführen, wenn der Zugriff zugelassen ist.

## Revendications

1. Système de communication mobile comprenant une station de base (201) et un terminal,
la station de base (201) étant apte à permettre à un signal de liaison descendante d'inclure non seulement un numéro de station de base indiquant la station de base (201) mais également un signal d'identification pour un usage spécifique indiquant que la station de base (201) est destinée à un usage spécifique et envoyer le signal de liaison descendante, et
le terminal comprenant une mémoire (25) qui est apte à stocker une liste de numéros de station de base d'identification d'une station de base accessible ou d'une station de base inaccessible pour chaque signal identification pour un usage spécifique, rechercher si le numéro d'identification de station de base dans le signal de liaison descendante reçu se trouve dans la liste de numéros de station de base pour chaque signal d'identification pour un usage spécifique détecté lorsque le signal d'identification pour un usage spécifique détecté à partir du signal de liaison descendante est ON, déterminer si l'accès à la station de base est permis sur la base du résultat de la recherche dans la liste de numéros de station de base d'identification, et effectuer une communication avec la station de base uniquement lorsque l'accès est permis.

2. Système de communication mobile selon la revendication 1, dans lequel la station de base est apte à inclure le signal d'identification pour un usage spécifique dans un canal commun de liaison descendante et envoyer le signal.

3. Système de communication mobile selon la revendication 1, comprenant en outre un réseau de communication mobile (52) relié à la station de base,
dans lequel la station de base est apte à envoyer périodiquement des informations indiquant si le signal d'identification pour un usage spécifique est envoyé, et
le réseau de communication mobile (52) est apte à envoyer les informations à une base de données (55) pour stocker les informations.

4. Système de communication mobile selon la revendication 3, dans lequel le réseau de communication mobile (52) comprend une unité de calcul de taux d'escompte apte à calculer un taux d'escompte de charge d'un utilisateur de la station de base sur la base de l'utilisation d'informations sur la station de base stockées dans la base de données (55).

5. Système de communication mobile selon la revendication 4, dans lequel l'unité de calcul de taux d'escompte est apte à augmenter le taux d'escompte de charge de l'utilisateur de la station de base lorsque le temps total pour envoyer le signal d'identification pour un usage spécifique est court ou lorsque le temps d'utilisation ou la quantité d'utilisation de paquet d'un utilisateur général autre que l'utilisateur de la station de base est plus grand.

6. Station de base dans un système de communication mobile, le système de communication mobile comprenant la station de base et un terminal,
la station de base étant apte à permettre à un signal de liaison descendante d'inclure non seulement un numéro d'identification de station de base indiquant la station de base mais également un signal d'identification pour un usage spécifique indiquant que la station de base est destinée à un usage spécifique et envoyer le signal de liaison descendante,
la station de base comprenant une unité de génération de signal d'identification (14, 44) qui est apte à générer le signal d'identification pour un usage spécifique qui est ON si l'accès à la station de base est limité et une unité de modulation (13) qui est apte à inclure le signal d'identification pour un usage spécifique généré et le signal d'identification de station de base dans le signal de liaison descendante, et envoyer le signal de liaison descendante.

7. Station de base selon la revendication 6, dans laquelle la station de base est apte à inclure le signal d'identification pour un usage spécifique dans un canal commun de liaison descendante et envoyer le signal.

8. Station de base selon la revendication 6, comprenant en outre
une unité d'entrée (48) qui est apte à entrer si une ressource de la station de base doit être occupée,
dans laquelle l'unité de génération de signal d'identification est apte à générer le signal identification pour un usage spécifique sur la base d'un résultat d'entrée de l'unité d'entrée (48) indiquant que la ressource de la station de base doit être occupée.

9. Terminal dans un système de communication mobile, le système de communication mobile comprenant une station de base et le terminal,
le terminal étant apte à recevoir, en provenance de la station de base, un signal de liaison descendante comprenant non seulement un numéro d'identification de station de base indiquant la station de base mais également un signal d'identification pour un usage spécifique indiquant que la station de base est destinée à un usage spécifique, le terminal comprenant :
une mémoire (25) qui est apte à stocker une liste de numéros d'identification de station de base d'une station de base accessible ou d'une station de base inaccessible pour chaque signal identification pour un usage spécifique ; et
une unité de détermination (26) qui est apte à rechercher si le numéro de station de base d'identification dans le signal de liaison descendante reçu se trouve dans la liste de numéros d'identification de station de base pour chaque signal d'identification pour un usage spécifique détecté lorsque le signal d'identification pour un usage spécifique détecté à partir du signal de liaison descendante est ON, déterminer si l'accès à la station de base est permis sur la base du résultat de la recherche dans la liste de numéros de station de base d'identification, et effectuer une communication avec la station de base uniquement lorsque l'accès est permis.
